# EUROPEAN PATENT APPLICATION

(11) **EP 2 066 052 A2**
(43) Date of publication of application: **03.06.2009**
(21) Application number: 08156359.5
(22) Date of filing: 16.05.2008
(51) Int. Cl.: H04H 40/18

(54) **Broadcast receiving apparatus and method for receiving hierarchically modulated broadcast signals**

(30) Priority: 29.11.2007 KR 20070123035
(71) Applicant: Samsung Electronics Co., Ltd., Suwon-si, Gyeonggi-Do (KR)
(72) Inventor: Lee, Young-jin, 813-1102, Byeokjeokgoi Apt., Suwon-si, Gyeonggi-do (KR)
(74) Representative: Walaski, Jan Filip

(57) **Abstract**

A broadcast receiving apparatus and method are provided. The broadcast receiving apparatus determines whether or not a received broadcast signal is a hierarchically modulated broadcast signal, and determines a demodulation method according to the determination result. Accordingly, a user can receive all of the broadcast services modulated in IIP and LP when the received broadcast signal is a hierarchically modulated broadcast signal.

## Description

The present invention relates to a broadcast receiving apparatus and method, and more particularly, to a broadcast receiving apparatus and method for receiving hierarchically modulated broadcast signals.

As a result of the development of digital broadcasting, diverse broadcast services of broadcast media have emerged. Due to the development of means for watching television while on the move as well as at home, viewers can view broadcasts at any place and any time.

In general, a broadcast station can provide a broadcast service through a channel. However, since users require to receive more diverse broadcast services, there is a need for methods to provide diverse broadcast services through a single channel. To fulfill this need, broadcast stations provide diverse broadcast services through a single channel using a multi-carrier method. The multi-carrier method is implemented using a hierarchical modulation. That is, two or more different broadcast services can be concurrently provided through a single channel by transmitting broadcast signals using hierarchical modulation.

However, a television does not generally receive all the hierarchically modulated broadcast signals, but can receive broadcast only signals modulated using a single method, as with receiving general broadcast signals.

Therefore, there is a need for methods to receive all of the hierarchically modulated broadcast signals.

An aspect of the present invention provides a broadcast receiving apparatus and method which determines a demodulation method according to whether or not a received broadcast signal is a hierarchically modulated broadcast signal in order to receive all of the hierarchically modulated broadcast signals.

According to an exemplary aspect of the present invention, there is provided a broadcast receiving apparatus, including a broadcast receiving unit which receives and demodulates a broadcast signal, an audio/video (A/V) processing unit which processes the broadcast signal, and an output unit which outputs the processed broadcast signal, wherein the broadcast receiving unit comprises a demodulation unit which determines whether or not the received broadcast signal is a hierarchically modulated broadcast signal, and determines a demodulation method according to a determination result.

The demodulation unit may determine whether or not the received broadcast signal is a hierarchically modulated broadcast signal using a hierarchical modulation flag contained in the broadcast signal.

The demodulation unit may determine the demodulation method of the hierarchically modulated broadcast signal using a hierarchical modulation method flag contained in the broadcast signal.

The hierarchically modulated broadcast signal has been modulated in a first modulation method and a second modulation method, and the demodulation unit scans channels by demodulating the hierarchically modulated broadcast signal in a first demodulation method corresponding to the first modulation method, and scans channels by demodulating the hierarchically modulated broadcast signal in a second demodulation method corresponding to the second modulation method.

The demodulation unit may determine a demodulation method of the hierarchically modulated broadcast signal by scanning a demodulation method in which the hierarchically modulated broadcast signal is normally demodulated when demodulating a part of the hierarchically modulated broadcast signal.

The hierarchically modulated broadcast signal may be modulated in two or more modulation methods, and the demodulation unit may demodulate the hierarchically modulated broadcast signal in demodulation methods corresponding to the respective modulation methods.

The hierarchically modulated broadcast signal has been modulated in the first modulation method and the second modulation method.

The first modulation method may be 4 Quadrature Amplitude Modulation (QAM), and the second modulation method may be 16 QAM.

The two or more modulation methods may be at least two of 4 QAM, 16 QAM, 64 QAM and QPSK.

According to another exemplary aspect of the present invention, there is provided a tuner, including a conversion unit which converts a frequency of a received broadcast signal into an intermediate frequency, and a demodulation unit which converts the broadcast signal, in which the frequency is converted into the intermediate frequency, to a baseband and demodulates the broadcast signal, wherein the demodulation unit determines whether or not the broadcast signal is a hierarchically modulated broadcast signal, and determines a demodulation method according to a determination result.

According to another exemplary aspect of the present invention, there is provided a method for receiving a hierarchically modulated broadcast signal, the method including receiving a broadcast signal, determining whether or not the received broadcast signal is a hierarchically modulated broadcast signal, and determining a demodulation method according to a determination result.

In the determining operation, whether or not the received broadcast signal is a hierarchically modulated broadcast signal may be determined using a hierarchical modulation flag contained in the broadcast signal.

The method may further include determining the demodulation method of the hierarchically modulated broadcast signal using a hierarchical modulation method flag contained in the broadcast signal.

The hierarchically modulated broadcast signal has been modulated in a first modulation method and a second modulation method, the method further including scanning channels by demodulating the hierarchically modulated broadcast signal in a first demodulation method corresponding to the first modulation method, and scanning channels by demodulating the hierarchically modulated broadcast signal in a second demodulation method corresponding to the second modulation method.

The method may further include determining a demodulation method of the hierarchically modulated broadcast signal by scanning a demodulation method in which the hierarchically modulated broadcast signal is normally demodulated when demodulating a part of the hierarchically modulated broadcast signal.

The hierarchically modulated broadcast signal may be modulated in two or more modulation methods, and in the demodulating operation, the hierarchically modulated broadcast signal may be demodulated in demodulation methods corresponding to the respective modulation methods.

The hierarchically modulated broadcast signal has been modulated in the first modulation method and the second modulation method.

The first modulation method may be 4 Quadrature Amplitude Modulation (QAM), and the second modulation method may be 16 QAM.

The two or more modulation methods may be at least two of 4 QAM, 16 QAM, 64 QAM and QPSK.

The above and/or other aspects of the present invention will be more apparent by describing certain exemplary embodiments of the present invention with reference to the accompanying drawings, in which:
FIG. 1 is a block diagram illustrating the configuration of a digital television according to an exemplary embodiment of the present invention;
FIG. 2 is a block diagram illustrating the configuration of a broadcast receiving unit according to an exemplary embodiment of the present invention;
FIG. 3 is a flowchart illustrating a method for receiving a hierarchically modulated broadcast signal according to an exemplary embodiment of the present invention;
FIG. 4 illustrates the configuration of a broadcast signal stream according to an exemplary embodiment of the present invention; and
FIG. 5 illustrates a tree structure of a broadcast channel according to an exemplary embodiment of the present invention.

Certain exemplary embodiments of the present invention will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

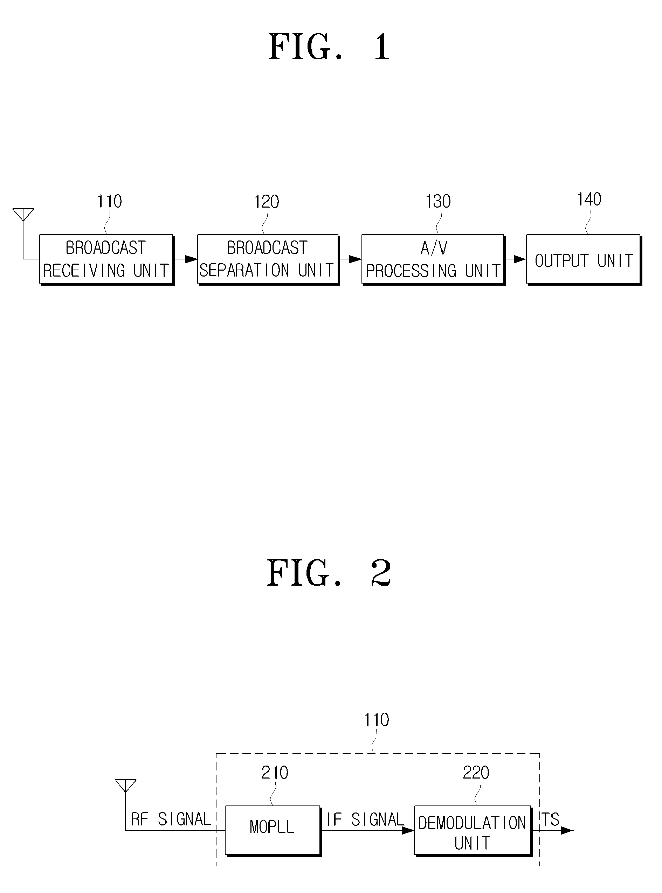

FIG. 1 is a block diagram illustrating the configuration of a digital television according to an exemplary embodiment of the present invention. As shown in FIG. 1, the digital television includes a broadcast receiving unit 110, a broadcast separation unit 120, an audio/video (A/V) processing unit 130, and an output unit 140.

The broadcast receiving unit 110 receives and demodulates broadcasts wiredly or wirelessly from broadcast stations or satellites, and also can receive hierarchically modulated broadcast signals.

The hierarchical modulation refers to modulating broadcast signals using two modulation methods in a single channel. A signal in which a broadcast station modulates a MPEG transport stream (TS) in different modulation methods in a single channel is referred to as a hierarchically modulated broadcast signal.

In addition, in hierarchical modulation, two separated data streams are generally modulated in high priority (HP) and low priority (LP) modulation methods, respectively. For example, the modulation method may be at least one of 4 Quadrature Amplitude Modulation (QAM), 16 QAM, 64 QAM, Quadrature Phase Shift Keying (QPSK). A stream modulated using an HP modulation method is referred to as an HP stream, and a stream modulated using an LP modulation method is referred to as an LP stream. For example, an LP modulation method may be 16 QAM, and an HP modulation method may be 4 QAM.

The HP stream and LP stream may contain the same content, or different content. In other words, a broadcast station may provide two different services of two different forms through a single channel.

If the HP stream and LP stream contain the same content, the content can be received by different sorts of devices, or a single piece of content can be transmitted without regard for the transmission environment.

In general, an HP modulation method has a low data rate and wide service area due to high transmission, and so has advantages in mobile communication. An LP modulation method has a high data rate and narrow service area due to low transmission, and so has advantages in fixed reception.

In order to reduce interference due to multi-paths caused by, for example, heavy rain, the broadcast station maximizes information transmission by modulating broadcast signals using an HP modulation method. However, although data modulated in an HP method are strong against heavy rain, the amount of data to be able to be transmitted is reduced. If the weather is good, the same content is transmitted with broadcast signals modulated in an LP modulation method for high quality of images.

In this case, the broadcast station broadcasts the same content using both HP and LP modulation methods.

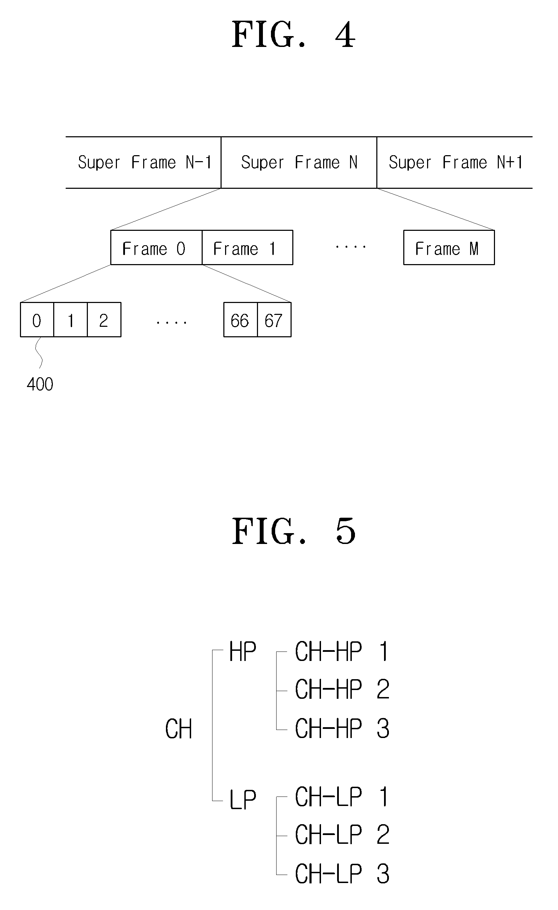

In addition, the broadcast station uses hierarchical modulation to provide two kinds of content through a single channel. Since a broadcast station is generally allocated with a single channel, the broadcast station can provide users a plurality of content using hierarchical modulation with ease. An example of providing a plurality of content (or channels) will be given below with reference to FIG. 5.

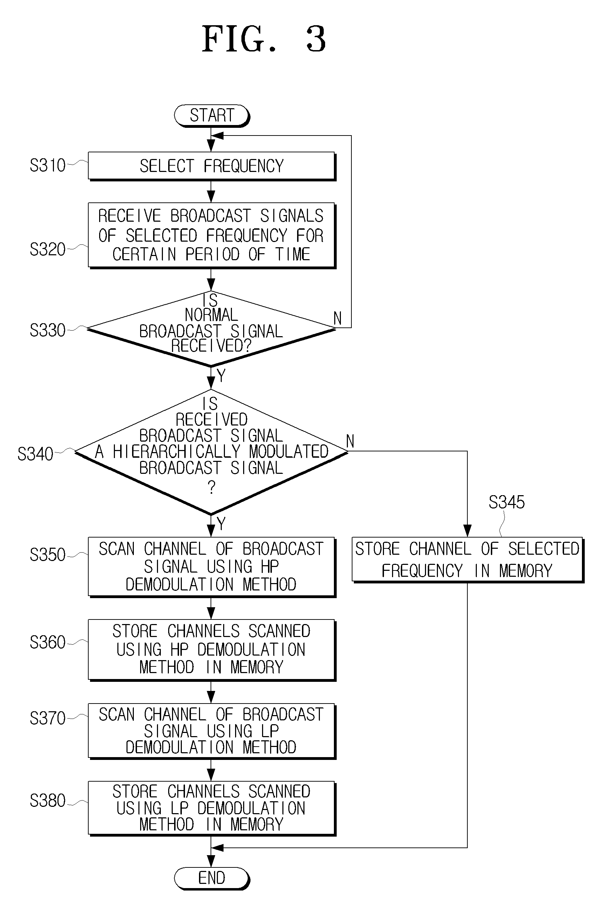

The broadcast receiving unit 110 receives both an HP and LP stream in a hierarchically modulated broadcast signal. The broadcast receiving unit 110 will be described below in detail with reference to FIGS. 2 and 3.

The broadcast separation unit 120 separates a video signal, an audio signal, and an additional information signal from a broadcast signal. The broadcast separation unit 120 transmits the separated broadcast signal to the A/V processing unit 130.

The A/V processing unit 130 processes the broadcast signal by performing video decoding, video scaling, and audio decoding, and transmits the processed broadcast signal to the output unit 140.

The output unit 140 outputs video and audio signals. That is, the output unit 140 outputs video on a display or to an external device (for example, an external television) connected through an external output terminal, and outputs audio using a speaker or an external device connected through an external output terminal.

Hereinafter, the broadcast receiving unit 110 is described in greater detail with reference to FIG. 2, which is a detailed block diagram illustrating the configuration of a broadcast receiving unit according to an exemplary embodiment of the present invention.

As shown in FIG. 2, the broadcast receiving unit 110 includes a mixer oscillator phase locked loop (MOPLL) 210 and a demodulation unit 220.

The MOPLL 210 includes a mixer, an oscillator, and a phase locked loop (PLL). The MOPLL 210 is a kind of frequency conversion element which converts a radio frequency (RF) signal into an intermediate frequency (IF) signal. That is, the MOPLL 210 lowers the frequency of a broadcast signal to an intermediate frequency.

The demodulation unit 220 converts the IF signal received from the MOPLL 210 into a baseband signal and demodulates the baseband signal. Accordingly, the demodulation unit 220 outputs the signal in transport stream (TS) format. The demodulation unit 220 determines whether or not a received broadcast signal is a hierarchically modulated broadcast signal, and determines a demodulation method according to the determination results.

Whether or not a received broadcast signal is a hierarchically modulated broadcast signal is determined using a hierarchical modulation flag contained in a broadcast signal. A modulated broadcast signal includes an orthogonal frequency division multiplexing (OFDM) symbol. The OFDM symbol includes transmission parameter signaling (TPS), and the hierarchical modulation flag is included in the TPS. Accordingly, the demodulation unit 220 can determine whether or not a received broadcast signal is a hierarchically modulated broadcast signal using the hierarchical modulation flag in the TPS of the broadcast signal.

In addition, the demodulation unit 220 determines a method of demodulating the hierarchically modulated broadcast signal using a hierarchical modulation method flag. The hierarchical modulation method flag is contained in the TPS of the OFDM symbol. The TPS includes a flag indicating which modulation method a broadcast signal is modulated in. In addition, if the broadcast signal is hierarchically modulated, the TPS includes a flag indicating which broadcast signal uses an HP modulation method, and indicating which broadcast signal uses an LP modulation method.

For example, a modulation method may be at least one of 4 QAM, 16 QAM, 64 QAM, and QPSK. The TPS may include a flag indicating that QPSK is used as an HP modulation method and 16 QAM is used as an LP modulation method. Detailed description of the TPS will be given below with reference to FIG. 4.

The demodulation unit 220 demodulates a broadcast signal in a demodulation method corresponding to a method in which the broadcast signal is modulated. In addition, for a hierarchically modulated broadcast signal, the demodulation unit 220 can demodulate a broadcast signal of an HP modulation method and a broadcast signal of an LP modulation method together.

Moreover, without using the hierarchical modulation method flag, the demodulation unit 220 may determine a demodulation method of a hierarchically modulated broadcast signal by scanning a demodulation method by which a broadcast signal is normally demodulated when a part of the broadcast signal is demodulated.

For example, the demodulation unit 220 determines whether or not a TS is normally demodulated after demodulating a part of a broadcast signal in a 16 QAM method. If the TS is normally demodulated, the broadcast signal has been demodulated in a 16 QAM. If the TS is not normally demodulated, the demodulation unit 220 determines whether or not the TS is normally demodulated by demodulating the broadcast signal in a demodulation method corresponding to another modulation method.

Hereinafter, the process of receiving a hierarchically modulated broadcast signal is described with reference to FIG. 3 which is a flowchart illustrating a method for receiving a hierarchically modulated broadcast signal according to an exemplary embodiment of the present invention.

As shown in FIG. 3, the broadcast receiving unit 110 selects the frequency of broadcast signals to be received (S310), and receives broadcast signals at the selected frequency for a certain period of time (S320).

Subsequently, the broadcast receiving unit 110 determines whether or not a normal broadcast signal is received (S330). If a normal broadcast signal is not received (S330-N), a channel of the selected frequency is determined to be a channel which does not provide a broadcast service.

If a normal broadcast signal is received (S330-Y), the broadcast receiving unit 110 determines whether or not the received broadcast signal is a hierarchically modulated broadcast signal (S340). If the received broadcast signal is not a hierarchically modulated broadcast signal but instead a general broadcast signal (S340-N), the broadcast receiving unit 110 stores channel information regarding the selected frequency in a memory (S345).

For example, the broadcast receiving unit 110 stores information regarding the frequency of the current channel, the modulation method and the data rate in a memory. If the user selects the stored current channel later, the broadcast receiving unit 110 receives broadcast signals through the channel using the information stored in the memory.

If the received broadcast signal is a hierarchically modulated broadcast signal (S340-Y), the broadcast receiving unit 110 firstly scans sub-channels of the broadcast signal in an HP demodulation method (S350) since there are a plurality of sub-channels in a single broadcast signal of a single broadcast station. For example, a broadcast signal modulated in an HP modulation method may include three sub-channels: CH_HP 1, CH_HP 2, and CH_HP 3.

Subsequently, the broadcast receiving unit 110 stores information regarding sub-channels scanned in an HP demodulation method in the memory (S360). The information regarding sub-channels stored in the memory is used when the user selects the channel.

Subsequently, the broadcast receiving unit 110 scans sub-channels of the broadcast signal in an LP demodulation method (S370). For example, a broadcast signal modulated in an LP modulation method may include three sub-channels: CH_LP 1, CH_LP 2, and CH_LP 3.

Next, the broadcast receiving unit 110 stores information regarding sub-channels scanned in an LP demodulation method in the memory (S380). The information regarding sub-channels stored in the memory is used when the user selects the channel.

Following the process described above, the broadcast receiving unit 110 can receive HP-modulated broadcast signals and LP-modulated broadcast signals together as hierarchically modulated broadcast signals. Accordingly, the user can be provided with all of the channels provided in an HP modulation method and an LP modulation method as channels providing broadcast signals which are hierarchically modulated by a broadcast station.

Hereinafter, the configuration of a broadcast signal is described with reference to FIG. 4 which illustrates the configuration of a broadcast signal stream according to an exemplary embodiment of the present invention.

As shown in FIG. 4, a broadcast signal includes a plurality of super frames including a plurality of frames. A frame consists of 68 numbers of OFDM symbols. A single OFDM symbol 400 includes a carrier signal which is used for modulation, a scattered pilot carrier and continual pilot carrier which is used for synchronization, and a TPS.

The TPS includes information regarding a transmission environment, and more specifically includes information regarding the transmission mode, guard ratio, hierarchical modulation method flag, hierarchical modulation flag, and code ratio. This information is expressed in a flag form.

The transmission mode includes two modes of a 2k mode and an 8k mode. In a 2k mode, a broadcast signal is modulated to 1705 carriers, and in an 8k mode, a broadcast signal is modulated to 6817 carriers. In a 2k mode using 1705 carriers, intervals between the carriers are approximately 4.46kHz, and in an 8k mode, intervals between the carriers are approximately 1.12kHz. (In Europe, 8MHz is generally used as a frequency bandwidth to receive TV.) As intervals between carriers are narrower, it is more sensitive to phase noise. Accordingly, upon mobile reception, a 2k mode which is strong at phase noise is well received more than an 8k mode. In an 8k mode, among 6817 carriers, sub-carriers are 6048 carriers and pilot signals are 768 carriers. In a 2k mode, among 1705 carriers, sub-carriers are 1512 carriers and pilot signals are 192 carriers.

The guard ratio uses 1/4, 1/8, 1/16, and 1/32 as a guard zone. As the guard zone value gets higher (the maximum value is 1/4), interference by multi-path propagation is reduced, and self-interference occurring between multi-transmitters in a single frequency network (SFN) is reduced. However, as a protection section is larger, the amount of data which can be transmitted is reduced.

A hierarchical modulation method flag includes information regarding a modulation method of a hierarchically modulated broadcast signal. The modulation method includes QPSK, 4 QAM, 16 QAM, and 64 QAM. Modulation methods other than these can also be used.

The hierarchical modulation flag indicates whether or not to be a hierarchically modulated broadcast signal.

The code ratio is expressed in a ratio of effective bit data rate to a total of data rate, and generally uses 1/2, 2/3, 3/4, 5/6, and 7/8. As the data rate is higher (the maximum data rate is 7/8), data transmission is more efficient. However, there is a shortcoming that as the data rate increases, error prevention becomes more difficult, the service area becomes narrower, and the quality of service decreases. The configuration of a broadcast signal stream is identified as described above. Hereinafter, a channel structure of a hierarchically modulated broadcast signal is described with reference to FIG. 5 which illustrates a tree structure of a broadcast channel according to an exemplary embodiment of the present invention.

As shown in FIG. 5, a channel of a hierarchically modulated broadcast signal is divided into an HP and LP modulation method. Channels modulated in an HP modulation method include CH-HP 1, CH-HP 2, and CH-HP 3, and channels modulated in an LP modulation method include CH-LP 1, CH-LP 2, and CH-LP 3. In FIG. 5, the CH indicates a channel of a broadcast station, and the CH-HP 1, CH-HP 2, CH-HP 3, CH-LP 1, CH-LP 2, and CH-LP 3 indicate sub-channels.

Each of the sub-channels may transmit the same content or different content. By constituting a channel as described above, the broadcast receiving unit 110 can receive hierarchically modulated broadcast signals which are modulated in an HP modulation method and LP modulation method together, so the user can be provided all of the HP and LP content.

In the exemplary embodiment of the present invention, methods for hierarchically modulating broadcast signals include two methods of HP and LP modulation. Diverse hierarchical modulation methods other than these can also be applied. The exemplary embodiment of the present invention is described mainly based on the broadcast receiving unit 110 included in a digital television, but the technical idea of the present invention can be applied independently to a broadcast receiving unit. For example, the function of the broadcast receiving unit 110 in the exemplary embodiment of the present invention can be performed instead by a tuner.

As can be appreciated from the above description, a broadcast receiving apparatus and method which determines a demodulation method according to whether or not a received broadcast signal is a hierarchically modulated broadcast signal, so all of the hierarchically modulated broadcast signals can be received.

In particular, if a received broadcast signal is a hierarchically modulated broadcast signal, a television demodulates the broadcast signal in a demodulation method corresponding to a method in which the broadcast signal is modulated. Therefore, the user can receive all of the broadcast services modulated in HP and LP when the received broadcast signal is a hierarchically modulated broadcast signal. The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the invention, which is defined by the appended claims. Many alternatives, modifications, and variations will be apparent to those skilled in the art.

## Claims

1. A broadcast receiving apparatus for receiving a hierarchically modulated broadcast signal, the apparatus comprising:
means for receiving a broadcast signal;
means for determining whether or not the received broadcast signal is a hierarchically modulated broadcast signal; and
means for determining a demodulation method according to the determination result.

2. The broadcast receiving apparatus of claim 1, comprising:
a broadcast receiving unit for receiving and demodulating a broadcast signal;
an audio/video (A/V) processing unit for processing the broadcast signal; and
an output unit for outputting the processed broadcast signal,
wherein the broadcast receiving unit comprises a demodulation unit for determining whether or not the received broadcast signal is a hierarchically modulated broadcast signal, and for determining a demodulation method according to the determination result.

3. The broadcast receiving apparatus of claim 2, wherein the demodulation unit is arranged to determine whether or not the received broadcast signal is a hierarchically modulated broadcast signal using a hierarchical modulation flag contained in the broadcast signal.

4. The broadcast receiving apparatus of claim 2 or 3, wherein the demodulation unit is arranged to determine the demodulation method of the hierarchically modulated broadcast signal using a hierarchical modulation method flag contained in the broadcast signal.

5. The broadcast receiving apparatus of claim 4, wherein the hierarchically modulated broadcast signal has been modulated in a first modulation method and a second modulation method, and
the demodulation unit is arranged to scan channels by demodulating the hierarchically modulated broadcast signal in a first demodulation method corresponding to the first modulation method, and to scan channels by demodulating the hierarchically modulated broadcast signal in a second demodulation method corresponding to the second modulation method.

6. The broadcast receiving apparatus of claim 2, wherein the demodulation unit is arranged to determine a demodulation method of the hierarchically modulated broadcast signal by scanning a demodulation method in which the hierarchically modulated broadcast signal is normally demodulated when demodulating a part of the hierarchically modulated broadcast signal.

7. The broadcast receiving apparatus of claim 2, wherein the hierarchically modulated broadcast signal is modulated in two or more modulation methods,
and the demodulation unit is arranged to demodulate the hierarchically modulated broadcast signal in demodulation methods corresponding to the respective modulation methods.

8. The broadcast receiving apparatus of claim 7, **characterized in that** the hierarchically modulated broadcast signal has been modulated in a first modulation method and a second modulation method.

9. The broadcast receiving apparatus of claim 8, **characterized in that** the first modulation method is 4 Quadrature Amplitude Modulation (QAM), and the second modulation method is 16 QAM.

10. The broadcast receiving apparatus of claim 7, **characterized in that** the two or more modulation methods are at least two of 4 QAM, 16 QAM, 64 QAM and QPSK.

11. A broadcast receiving apparatus according to any one of the preceding claims, including a tuner, the tuner comprising:
a conversion unit for converting a frequency of a received broadcast signal into an intermediate frequency; and
a demodulation unit for converting the broadcast signal, in which the frequency is converted into the intermediate frequency, to a baseband and for demodulating the broadcast signal.

12. A method of receiving a hierarchically modulated broadcast signal, the method comprising:
receiving a broadcast signal;
determining whether or not the received broadcast signal is a hierarchically modulated broadcast signal; and
determining a demodulation method according to the determination result.

13. The method of claim 12, comprising determining whether or not the received broadcast signal is a hierarchically modulated broadcast signal using a hierarchical modulation flag contained in the broadcast signal.

14. The method of claim 12 or 13, further comprising:
determining the demodulation method of the hierarchically modulated broadcast signal using a hierarchical modulation method flag contained in the broadcast signal.

15. The method of claim 14, wherein the hierarchically modulated broadcast signal has been modulated in a first modulation method and a second modulation method, the method further comprising:
scanning channels by demodulating the hierarchically modulated broadcast signal in a first demodulation method corresponding to the first modulation method; and
scanning channels by demodulating the hierarchically modulated broadcast signal in a second demodulation method corresponding to the second modulation method.
